# EUROPEAN PATENT APPLICATION

(11) **EP 1 596 232 A1**
(43) Date of publication of application: **16.11.2005**
(21) Application number: 04711693.4
(22) Date of filing: 17.02.2004
(51) Int. Cl.: G02B 6/38

(54) **OPTICAL CONNECTOR-USE ADAPTOR AND OPTICAL CONNECTOR-USE SHUTTER COMPONENT**

(30) Priority: 18.02.2003 JP 2003040331
(71) Applicant: Furukawa Techno Material Co., Ltd, Hiratsuka-city, Kanagawa 254-0016 (JP); T.H. Furukawa Electric Co., Ltd., Hachinohe, Aomori 039-2282 (JP)
(72) Inventor: IWAI, Hirohisa c/o Furukawa Techno Material Co.Ltd, Hiratsuka, Kanagawa 2540016 (JP); TAKAHASHI, Shintarou Furukawa Tech Material Co.Ltd, Hiratsuka, Kanagawa 2540016 (JP); HABU, Tetsushi c/o Furukawa Techno Material Co.Ltd, Hiratsuka, Kanagawa 2540016 (JP); TAKAOKA, Kei c/o Furukawa Techno Material Co., Ltd, Hiratsuka, Kanagawa 2540016 (JP); TAKEUCHI, Yoshinori c/o T.H. Furukawa, Hachinohe, Aomori 039-2282 (JP)
(74) Representative: Liska, Horst
(86) International application number: PCT/JP2004/001693
(87) International publication number: WO 2004/074895

(57) **Abstract**

The present invention relates to an optical connector adapter that is so configured as to prevent a laser beam from leaking outwards to do harm to a person at the time of insertion or removal of an optical connector plug for optical connection, and, specifically, an optical connector adapter having, at one end side, a housing part with a tip end being open, and at the other end side, a coupling part adapted to provide coupling with an optical component, and serving to couple an optical connector plug coupled with the housing part by insertion with the optical component such that an optical axis is aligned, wherein a super-elastic alloy shutter plate having been subjected to a plate-shape memory heat-treatment without providing any bent part is so mounted at an inner position close to an opening end of the housing part as to stand upward from one wall surface to a position adapted to shield the optical axis.

## Description

### TECHNICAL FIELD

This invention relates to an optical connector adapter serving to prevent a laser beam from leaking outwards at the time when an optical connector plug or like optical component is inserted into or removed from the adapter for connection to or disconnection from an optical fiber, and also, a shutter component for optical connection; which is useful for the same purpose as the above by being mounted to the optical connector adapter.

### BACKGROUND ART

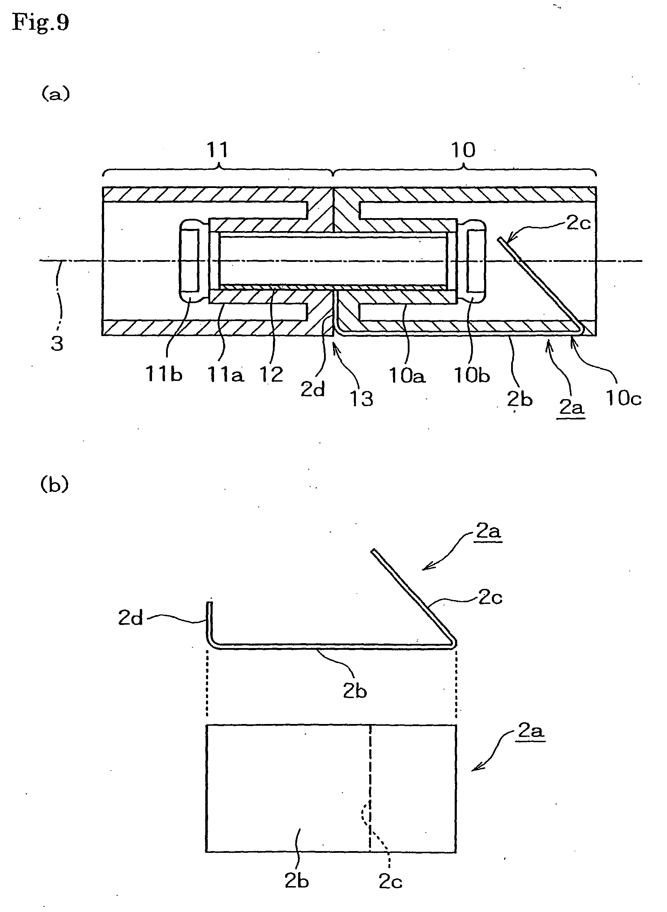

With an optical connector plug or like optical component coupled with only one end of an optical connector adapter, outward leakage of a laser beam emitted from an optical fiber occurs at the time when the optical component is inserted into or removed from the optical connector adapter. The leaking laser beam is liable to harm the eyes or others of an operator engaged in connection works. Thus, for the purpose of preventing a danger as described the above, an optical connector adapter as shown in FIG. 9 has been proposed in Japanese Patent Laid-open No. 10-148730, for instance.

The adapter shown in FIG. 9(a) has, at one end side, a housing part 10 with a tip end being open, and at the other end side, a housing-shaped coupling part 11 with a tip end being open, wherein the housing part 10 and the coupling part 11 are bonded together at basal end sides. Inner bottoms of the housing part 10 and the coupling part 11 have, at center portions, cylindrical sleeve holders 10a, 11a extending toward the tip ends respectively in a continuous shape, and a split sleeve 12 is inserted in an anti-slip-out state into each of the sleeve holders 10a, 11a. Reference numerals 10b, 11b denote latch pieces extending from the inner bottoms of the housing parts 10, 11 toward the tip ends respectively at the opposite sides of the sleeve holders 10a, 11a. Each of the housing part 10 and the coupling part 11 is available as a synthetic resin molded product that is in a bottomed oblong quadrangular cylindrical shape.

Reference numeral 2a denotes a shutter member formed with a thin super-elastic alloy (a shape memory alloy having super-elasticity) rolled plate. The shutter member 2a is composed of a support plate part 2b fixedly fitted into a groove 10c of small depth formed on one wall surface of the housing part 10 in parallel to a length direction of the surface, a shutter plate part 2c extending upwards in an inwardly slanted shape from a position close to an opening end in an inner direction, and a vertical plate part 2d put between mutually bonded bottom surfaces 13 of the housing part 10 and the coupling part 11.

As shown in FIGS. 9(a) and 9(b), the shutter plate part 2c extends integrally from the tip end of the support plate part 2b through an acute-angled bent part, while the vertical plate part 2d extends integrally from a basal end of the support plate part 2b through a right-angled bent part.

According to the optical connector adapter shown in FIG. 9, coupling a non-illustrated optical connector adapter or like optical component with a coupling part 11-side by insertion ensures that the laser beam emitted through a ferrule of the optical component in parallel to an optical axis 3 to the right in FIG. 9(a) is shielded with the shutter plate part 2c, permitting a prevention of a harmful effect by the above laser beam. Coupling a non-illustrated optical connector plug with the housing part 10 by insertion ensures that the shutter plate part 2c is bent with the optical plug deeply in a folded-up shape, so that the optical connector and the optical component are so coupled as to provide an alignment of the optical axis 3.

When the optical connector plug is pulled out of the housing part 10, the shutter plate part 2c is restored to its original state adapted to shield the optical axis 3 by the action of super-elasticity of the shutter plate part, permitting the prevention of outward leakage of the laser beam. The shutter member 2a consists of a super-elastic alloy being restored for itself, providing advantages of being capable of reducing a whole adapter size, and besides, suffering no degradation of restoration force, even after rising and falling of the shutter plate part 2c are carried out many times over.

According to the optical connector adapter in the conventional art as described the above, the shutter member 2a has the bent parts at the opposite ends of the support plate part 2b. Thus, in order to manufacture the shutter member, it is necessary to, after cutting a Ni-Ti alloy or like shape memory alloy rolled plate into a required shape of a required size, put a shape memory heat treatment (at a temperature of 400 to 600° C) into effect with the cut rolled plate constrained in a bent shape as shown in FIGS. 9(a) and 9(b). Alternatively, for the purpose of reducing a spring back amount, manufacturing takes place by, after cutting the rolled plate having been subjected to a plate-shape memory heat-treatment, bending the cut rolled plate at the temperature of 400 to 600° C.

However, the shutter member 2a requires, at the time when manufacturing the shutter member, the shape memory heat-treatment given with the cut rolled plate constrained in the bent shape, or the bending of the cut rolled plate at a high temperature after the plate-shape memory heat-treatment as described the above, leading to an increase in manufacturing cost. Further, the support plate part 2b has the shutter plate part 2c at one end and the vertical plate part 2d at the other end, so that a whole length needs to be increased, resulting in a problem of an increase in material cost. Furthermore, the vertical plate part 2d is put between the bonded surfaces 13 of the housing part 10 and the coupling part 11, resulting in a problem in which a misalignment of the optical axis 3 easily occurs.

### DISCLOSURE OF THE INVENTION

An object of the present invention is to provide an optical connector adapter and a shutter component for optical connection, which may hold down a manufacturing cost and a material cost as low as possible, and also, ensure that optical transmission is carried out satisfactorily without causing a misalignment of an optical axis.

In order to attain the above object, an optical connector adapter according to the present invention relates to an optical connector adapter, which has, at one end side, a housing part with a tip end being open, and at the other end side, a coupling part adapted to provide coupling with an optical component, and serves to couple an optical connector plug coupled with the housing part by insertion with the optical component such that an optical axis is aligned, wherein a super-elastic alloy shutter plate having been subjected to a plate-shape memory heat-treatment without providing any bent part is so mounted at an inner position close to an opening end of the housing part as to stand upward from one wall surface to a position adapted to shield the optical axis.

To attain the above object, a shutter component for optical connection according to the present invention relates to a shutter component for optical connection, which is useful by being mounted to an optical connector adapter having, at one end side, a housing part with a tip end being open, and at the other end side, a coupling part adapted to provide coupling with an optical component, has, at one end side, a housing with a tip end being open, and at the other end side, a coupled part coupled with the housing part of the optical connector adapter by insertion, and serves to couple an optical connector plug coupled with the housing by insertion with the optical component such that an optical axis is aligned, wherein a super-elastic alloy shutter plate having been subjected to a plate-shape memory heat treatment without providing any bent part is so mounted at an inner position close to an opening end of the housing as to stand upward from one wall surface to a position adapted to shield the optical axis.

To attain the above object, a second shutter component for optical connection according to the present invention relates to a shutter component for optical connection, which is useful by being mounted to an optical connector adapter having, at one end side, a housing part with a tip end being open, and at the other end side, a coupling part adapted to provide coupling with an optical component, and serving to couple an optical connector plug coupled with the housing part by insertion with the optical component such that an optical axis is aligned, wherein the shutter component has a cylindrical housing mounted to an outer circumference of a portion at least close to an opening end of the housing part such that the above opening end is merged into the housing by a predetermined distance, and a super-elastic alloy shutter plate having been subjected to a plate-shape memory heat-treatment without providing any bent part is so mounted to one wall surface of the housing as to stand upward from a position facing the opening end of the housing part with the housing mounted to the housing part to a position adapted to shield the optical axis.

### BRIEF DESCRIPTION OF THE DRAWINGS

FIG. 1 is a cross-sectional view showing a first embodiment of an optical connector adapter according to the present invention;
FIG. 2 is a fragmentary enlarged cross-sectional view taken along an arrow A-A in FIG. 1;
FIG. 3 is a fragmentary plan view showing a modification of a shutter plate;
FIG. 4 is a fragmentary exploded perspective view showing a second embodiment of the optical connector adapter according to the present invention;
FIG. 5 is an exploded cross-sectional view showing a first embodiment of a shutter component for optical connection according to the present invention;
FIG. 6 an exploded cross-sectional view showing a second embodiment of the shutter component for optical connection according to the present invention;
FIG. 7 is an exploded cross-sectional view showing a third embodiment of the shutter component for optical connection according to the present invention;
FIG. 8 is a graph showing a result of a test on durability of the shutter plate in embodiments of the present invention; and
FIG. 9 illustrates an optical connector adapter in a conventional art, with FIG. 9(a) of a cross-sectional view showing the same, and FIG. 9(b) of a side view and a plan view showing a shutter member.

### BEST MODE OF CARRYING OUT THE INVENTION

### First embodiment of optical connector adapter

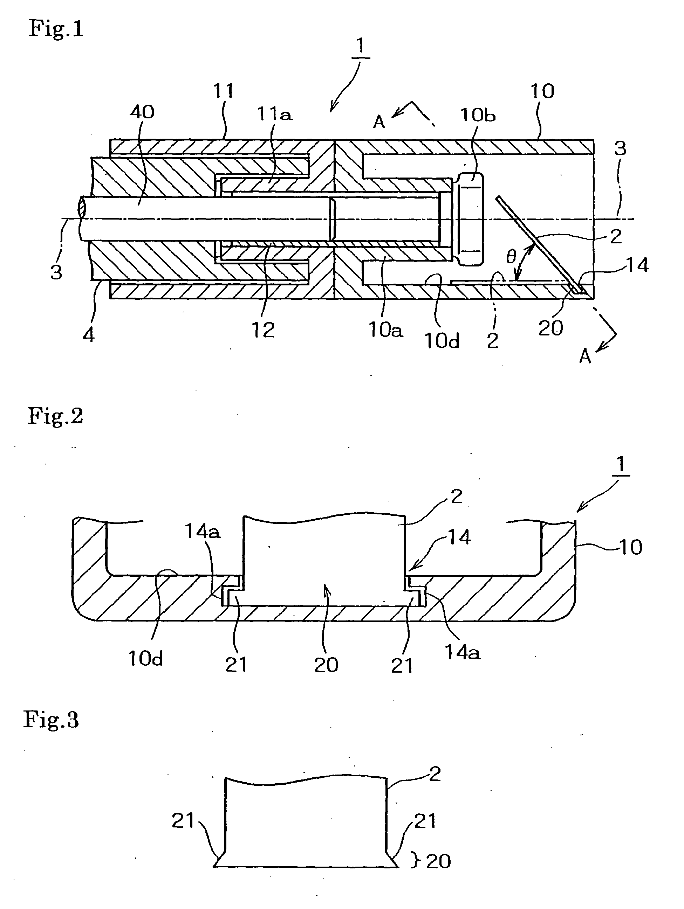

FIGS. 1 and 2 show a first embodiment of an optical connector adapter according to the present invention.

An optical connector adapter 1 of the first embodiment has, at one end side, a housing part 10 with a tip end being open, and at the other end side, a housing-shaped coupling part 11 with a tip end being open, wherein the housing part 10 and the coupling part 11 are bonded together at basal end (bottom surface) sides using an ultrasonic bonding process, for instance.

The housing part 10 and the coupling part 11 are approximately the same in basic configuration as those of the optical connector adapter shown in FIG. 9, so that like reference numerals as shown in FIG. 9 are given to like component portions, and a detailed description thereof is omitted.

A thin (several ten µm) Ni-Ti alloy or like super-elastic alloy shutter plate 2 having been subjected to a plate-shape memory heat-treatment without wholly providing any bent part is so mounted at an inner position close to an opening end of the housing part 10 as to stand upward from one wall surface 10d to a position adapted to shield an optical axis 3. As shown in FIG. 2, the first embodiment has, on one wall surface 10d at a position close to the opening end of the housing part 10, a groove 14 inwardly slanted in an inner direction of the housing part 10 to insert a base 20 of the shutter plate 2 into the groove 14 in an anti-slip-out state. Specifically, the groove 14 has tunnel-shaped portions 14a or hollow-shaped portions at the opposite ends, while the base 20 of the shutter plate 2 has laterally extending projections 21 at the opposite ends, providing a configuration of preventing the base 20 of the shutter plate 2 from being slipped out of the groove 14 by means of engagement of the projections 21 with the tunnel-shaped portions 14a. The projections 21 at the opposite ends of the base 20 of the shutter plate 2 may be triangular in planar shape as shown in FIG. 3, for instance, or other shapes without being limited to a quadrangular shape, so long as there is given any shape adaptable to guide the base 20, in a bent shape in a width direction, into the tunnel-shaped portions 14a.

The groove 14 is inwardly slanted (at an inclination angle of θ) in the inner direction of the housing part 10, so that the shutter plate 2 is also mounted in a slanted state likewise.

The shutter plate 2 is easily manufactured by punching or cutting, into a shutter plate shape, a thin Ni-Ti shape memory alloy rolled plate having been subjected to the plate-shape memory heat-treatment within a heat treatment furnace, with appropriate tensile force applied to the rolled plate.

According to the optical connector adapter of the above first embodiment, inserting the end of an optical component 4 including an optical connector, for instance, into the coupling part 11 up to the limit as shown in FIG. 1 ensures that a ferrule 40 extending through the center of the optical component 4 is so inserted as to reach a center portion within a split sleeve 12, so that the optical component 4 is coupled with the coupling part 11 by the opposite-side latch pieces. In this condition, a laser beam emitted from the optical component 4 is supposed to be shielded with the shutter plate 2, resulting in no outward leakage of the laser beam from the housing part. Coupling an optical connector plug of the same configuration as the optical component 4 with the housing part 10 by insertion ensures that the shutter plate 2 is deformed with the inserted plug into a state adapted to provide no shielding of the optical axis as shown by a chain double-dashed line in FIG. 1, so that the optical component 4-side and the optical connector are optically connected together in a state where their ferrules are in contact with each other. Pulling the plug out of the housing part 10 ensures that the shutter plate 2 is restored to its original state by the action of super-elasticity of the shutter plate, resulting in no outward leakage of the laser beam emitted from the optical component 4-side. Thus, a safety in connection works may be ensured.

The shutter plate 2 consists of a super-elastic alloy having been subjected to the plate-shape memory heat-treatment without wholly providing any bent part, and may be efficiently manufactured by punching or cutting, into the shutter shape, the thin alloy rolled plate after the plate-shape memory heat treatment, resulting in a more reduction in manufacturing cost. The shutter plate has neither the support plate part nor the vertical part, unlike the conventional product, resulting in a more reduction in material cost as well. Further, the shutter plate 2 does not contain any element that causes a misalignment of the optical axis, enabling satisfactory optical connection to be attained.

The shutter plate 2 is also supposed to be adaptable in such a manner as to be so mounted as to stand upward at a right angle from one wall surface 10d within the housing part 10, in which case, however, when coupling the optical connector plug with the housing part 10 by insertion, dust or foreign matters having covered, in an adhered state, the surface of the shutter plate 2 are transferred to a tip end surface of the ferrule, leading to a possibility that the dust or the foreign matters begin to burn by heat of transmission light. Thus, it is preferable that the shutter plate 2 is inwardly slanted in the inner direction of the housing part 10. With decreasing inclination angle θ, the shutter plate 2 increases in length, which contributes to the increase in material cost, and besides, easily causes a breakage by a strong contact of the ferrule with the shutter plate 2 when coupling the optical connector plug with the housing part by insertion. In considerations of the above various circumstances, the inclination angle θ of the shutter plate 2 is more preferably in the range of 30 to 60° .

### Second embodiment of optical connector adapter

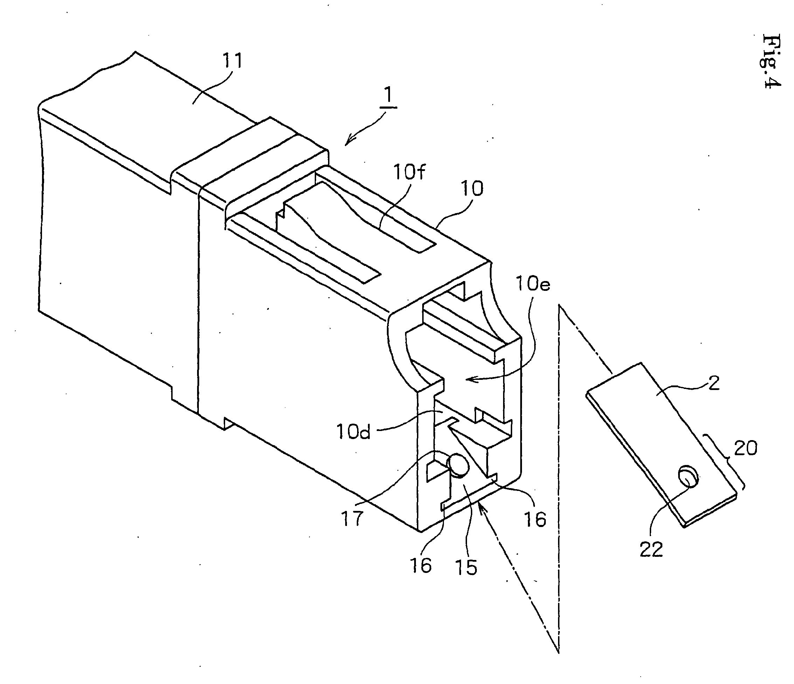

FIG. 4 shows a second embodiment of the adapter according to the present invention.

This adapter has, at one end side, the housing part 10 with the tip end being open, and at the other end side, the coupling part 11 with the tip end being open, wherein the bottom surfaces of both the housing part 10 and the coupling part 11 are bonded together.

There is provided an insertion guide groove 10e having an approximately quadrangular shape in section, which extends from the opening end of the housing part 10 in the inner direction. The thin rectangular Ni-Ti alloy or like super-elastic alloy shutter plate 2 having been subjected to the plate-shape memory heat-treatment without wholly providing any bent part is so mounted, in an inwardly slanted shape in the inner direction, at the inner position close to the opening end of the housing part 10 as to stand upward from one wall surface 10d to the position adapted to shield the optical axis.

One wall surface 10d of the housing part 10 provides a slant surface 15 extending in the inwardly slanted shape from the opening end in the inner direction and being slightly smaller in width than the shutter plate 2, and the slant surface 15 has, at an approximately central portion, a projection 17 of small height. The inclined surface 15 has, at the opposite sides, confronting dovetail groove-like-shaped grooves 16, 16 extending in parallel to the slant surface 15, and a distance between lower parts of the grooves 16 is configured to be slightly larger than the width of the shutter plate 2. Meanwhile, the base 20 of the shutter plate 2 has a hole 22 corresponding to the projection 17. The shutter plate 2 is supposed to set the base 20 on the slant surface 15 with the projection 17 engaged with the hole 22 (in the anti-slip-out state) in such a manner as to slide the shutter plate in the inner direction of the housing part 10, after allowing the shutter plate to get over the projection 17 with the tip end of the shutter plate slightly bent in the width direction, while sliding the shutter plate from the opening end side with the opposite sides of the shutter plate inserted into the grooves 16, 16.

The slant surface 15 is formed at the inclination angle enough to permit a maximum bending strain of the shutter plate 2 to reach 2% or below at the time when coupling the optical connector with the housing part 10 by insertion, and besides, takes into account a clearance between an inner wall surface of the housing part 10 and the optical connector plug coupled with the housing part 10 by insertion such that the maximum bending strain reaches 2% or below. Further, a more reduction in maximum bending angle may be attained by forming an upper end of the slant surface 15 in a slightly circular-arc shape in section, instead of a square shape.

Reference numeral 10f denotes a latch piece formed at each of opposite outside surfaces (upper and lower surfaces in the drawing) of the housing part 10 in order to mount the adapter 1 to the other member.

The optical connector adapter 1 according to the second embodiment ensures that the shutter plate 2 is provided in the rectangular shape, so that wastes of a material may be more reduced, resulting in a more reduction in material cost.

Other configurations, operations and effects in the optical connector adapter of the second embodiment are approximately the same as those in the adapter of the first embodiment, and hence, a description thereof is omitted.

### First embodiment of shutter component for optical connection

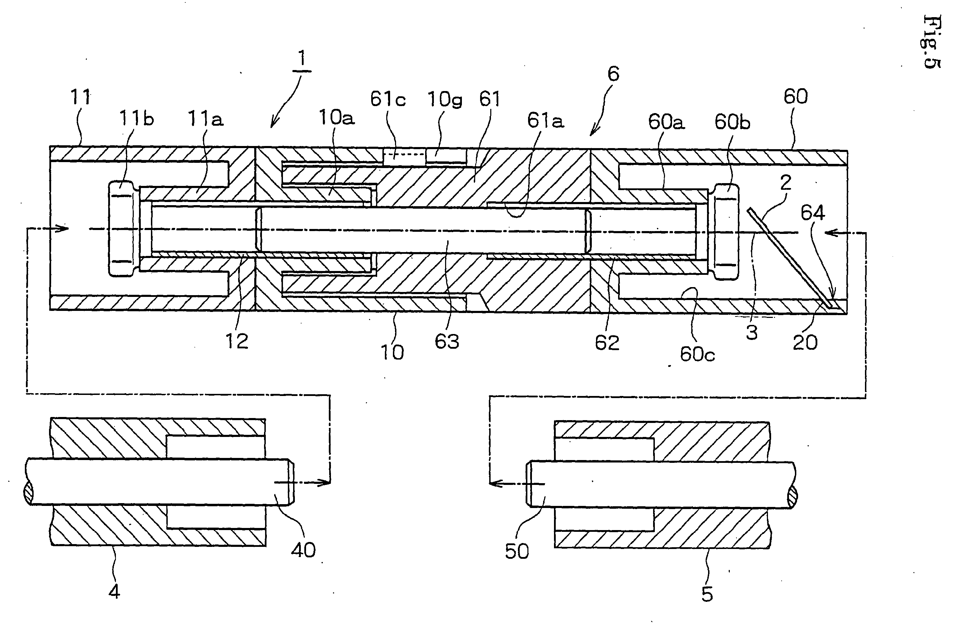

FIG. 5 shows a shutter component for optical connection of a first embodiment according to the present invention.

The optical connector adapter 1 is approximately the same in basic configuration as the optical connector adapter of the first embodiment, and like reference numerals are given to like portions, and a detailed description thereof is omitted.

In the housing part 10 of the connector 1, reference numeral 10g denotes a guide slit serving to guide a projection 61c formed, as a mark of an appropriate insertion position, at an outer circumference of a coupled part 61 in a shutter member 6 described later.

The shutter component 6 for optical connection has, at one end side, a housing 60 having a tip end being open and adapted to provide coupling with the optical connector 5 by insertion, and at the other end side, the coupled part 61 coupled with the housing part 10 of the optical connector adapter 1 by insertion, wherein the housing 60 and the coupled part 61 are so bonded as to extend integrally in a length direction.

The housing 60 is approximately the same in configuration as the housing part 10 of the adapter 1, wherein the inner bottom of the housing has a sleeve holder 60a at the central portion, and the sleeve holder 60a has, at the opposite sides, latch pieces 60b extending from the inner bottom surface toward the opening end.

A tip end portion of the coupled part 61 is also approximately the same in configuration as the tip end portion of the optical connector 5, wherein a ferrule 63 extends through the center of the coupled part in the length direction. A base end of the coupled part 61 has, at the central portion, a sleeve mounting hole 61a in alignment with a hole of the sleeve holder 60a, and a split sleeve 62 is held with the sleeve holder 60a and the mounting hole 61a in the anti-slip-out state.

The thin super-elastic alloy shutter plate 2 having been subjected to the plate-shape memory heat-treatment without wholly providing any bent part is so mounted at the inner position close to the opening end of the housing 60 as to stand upward, in the inwardly slanted shape in the inner direction, from one wall surface 60c to the position adapted to shield the optical axis 3.

Like the shutter plate 2 of the first embodiment, the shutter plate 2 is mounted in the anti-slip-out state to the groove 64 formed in the inwardly slanted shape on one wall surface 60c within the housing 60, with the base 20 guided into the groove 64.

In the case of optical connection, the shutter component 6 for optical connection of the first embodiment firstly allows the coupled part 61 of the shutter component 6 to be coupled with the housing part 60 of the optical connector adapter by insertion, as shown in FIG. 5. In this condition, coupling the optical connector adapter or like optical component 4 with the coupling part 11 of the adapter 1 ensures that the laser beam emitted through the ferrule 40 of the optical component 4 is shielded with the shutter plate 2 in the housing 60. Coupling the optical connector plug 5 with the housing 60 of the shutter component 6 by insertion ensures that the shutter plate 2 is displaced in the bent shape with the plug 5 to the position adapted to provide no shielding of light, in which case, the ferrules 40, 63, 50 make contact with one another in the continuous shape, so that the optical component 4 and the optical connector plug 5 are coupled such that the optical axis 3 is aligned. Thus, there may be provided the operations and effects being the same as those in the optical connector adapter of the first embodiment. Further, applying to the existing optical connector adapter having no shutter means permits effective utilization of the existing optical connector adapter.

The effects obtained by the configuration of the shutter plate 2 are the same as those obtained in the optical connector adapter 1 of the first embodiment.

### Second embodiment of shutter component for optical connection

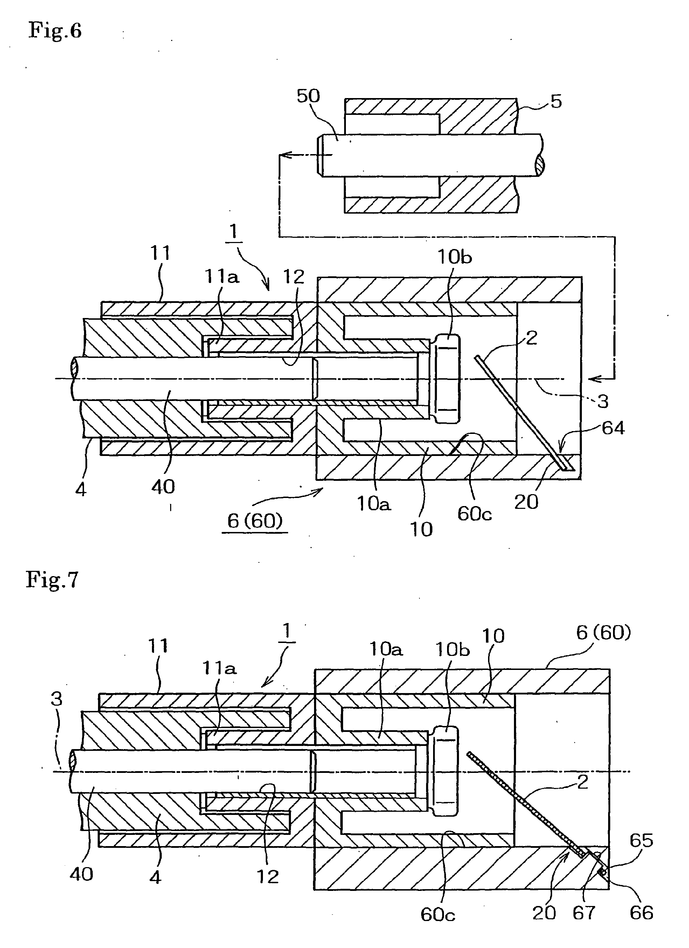

FIG. 6 shows the shutter component for optical connection of the second embodiment according to the present invention.

In the second embodiment, the optical connector adapter 1 is the same in basic configuration as the optical connector adapter in FIG. 5, so that like reference numerals as shown in the adapter of FIG. 5 are given to like portions, and a description thereof is omitted.

The shutter component 6 for optical connection has a cylindrical housing 60 mounted to the outer circumference of the housing part 10 of the adapter 1 such that the opening end of the housing part 10 is merged into the housing by a prescribed distance, and the housing 60 has, on left and right surfaces at the outer circumference, flanges (not shown) serving to mount the shutter component to a non-illustrated other member.

The thin super-elastic alloy shutter plate 2 having been subjected to the plate-shape memory heat-treatment without wholly providing any bent part is so mounted to one wall surface 60c within the housing 60 as to stand upward, in the inwardly slanted shape toward the opening end of the housing part 10, from a position facing the above opening end to the position adapted to shield the optical axis 3, with the housing mounted to the housing part 10.

Like the configuration of the shutter component 6 of the first embodiment, one wall surface 60c of the housing 60 has the slanted groove 64, and the shutter plate 2 is mounted to one wall surface 60c of the housing 60, with the base 20 inserted into the groove 64 in the anti-slip-out state.

In the case of optical connection, the shutter component 6 for optical connection of the second embodiment firstly allows the housing 60 of the shutter component 6 to be mounted to the housing part 10 of the optical connector adapter 1 such that the opening end of the housing 60 is merged into the housing 60 by the prescribed distance, as shown in the drawing. In this condition, the optical connector plug or like optical component 4 is coupled with the coupling part 11 of the adapter 1, providing the same operations and effects as those in the optical connector adapter 1 of the first embodiment in the case of the subsequent coupling of the optical connector plug 5 with the housing part 10 by insertion or pulling-out of the optical connector plug 5. Further, applying to the existing optical connector adapter having no shutter means permits the effective utilization of the existing optical connector adapter.

The effects obtained by the configuration of the shutter plate 2 are the same as those in the optical connector adapter 1 of the first embodiment.

### Third embodiment of shutter component for optical connection

FIG. 7 shows the shutter component for optical connection of a third embodiment according to the present invention.

The shutter component 6 for optical connection is approximately the same in basic configuration as the shutter component 6 of the second embodiment, in which case, however, there is a difference in mounting procedure of the shutter plate 2 between the shutter components 6 in the second and the third embodiments.

The rectangular shutter plate 2 is mounted to one wall surface 60c within the housing 60 according to the approximately same procedure as that shown in FIG. 4.

That is, one wall surface 60c in the housing 60 provides, at a position facing the housing part 10 with the housing 60 mounted to the housing part 10 of the adapter 1, a slant surface 65 inwardly slanted toward the opening end of the housing part 10. The slant surface 65 has, thereon, a projection 67 of small height, and at the opposite sides, confronting dovetail groove-like-shaped grooves 66 extending in parallel to the slant surface 65. Meanwhile, the base 20 of the shutter plate 2 has a hole (shown without any reference numeral) corresponding to the projection 67, and the shutter plate 2 is mounted to the slant surface 65, with the opposite sides inserted into the grooves 66 in such a manner that the projection 67 is guided to the hole.

In the third embodiment, the effects obtained by the shape and the mounting procedure of the shutter plate 2 are the same as those in the optical connector adapter (See FIG. 4) of the second embodiment, and other effects are the same as those in the shutter component (See FIG. 6) of the second embodiment.

### Other embodiments

In the shutter component 6 for optical connection shown in FIG. 5, it is allowable to make up the procedure of mounting the shutter plate 2 to the housing 60 like the mounting procedure of the shutter plate 2 shown in FIG. 7.

### Example 1

After external machining of an ingot resulting from vacuum dissolution casting of a Ni-Ti alloy having a metal composition of 50.9 at% of Ni and 49.1 at% of Ti, a slab of 30mm in thickness, 160mm in width and 2500mm in length was produced through hot pressing involving a temperature of 800° C. Following removal of an oxide film from the slab by sand blasting, the slab was heated up to 850° C to put hot rolling into effect up to a thickness of 3mm. Continuous annealing of the resultant rolled plate at a temperature of 700° C was followed by the removal of the oxide film from the surface by grinding, and was then followed by a process of cold rolling→ degreasing→annealing repeatedly. Then, following final base annealing, finish cold rolling ensuring a rolling rate of 25% was put into effect to produce a foil material of 0.050mm in thickness. Subsequently, with the appropriate tensile force to the above foil material, the above foil material was passed through a continuous heat-treatment furnace for the plate-shape memory heat-treatment to produce a desired Ni-Ti super-elastic alloy foil.

The Ni-Ti super-elastic alloy foil obtained as described the above was cut into the shutter plate of the shape by punching as shown in FIGS. 1 and 2, and this shutter plate was mounted to the housing part 10 of the optical connector adapter 1 having the configuration shown in FIG. 1. Then, the coupling of the optical connector with the housing part 10 by insertion and pulling-out of the optical connector (insertion and removal) were carried out repeatedly to check durability of the shutter plate 2. As a result, it was appreciated that even after repetition of the insertion and removal many times over, the shutter plate 2 is kept in the plate shape enough to provide satisfactory shutter functions.

The shutter member of the optical connector adapter in the conventional art shown in FIG. 9(b) was produced likewise, and a test similar to the above was conducted by mounting the above shutter member to the housing part of the adapter. The result was inferiority in light transmitting characteristics due to an occurrence of the misalignment of the optical axis, although the durability of the shutter member was the same as that in the first example of the present invention.

### Example 2

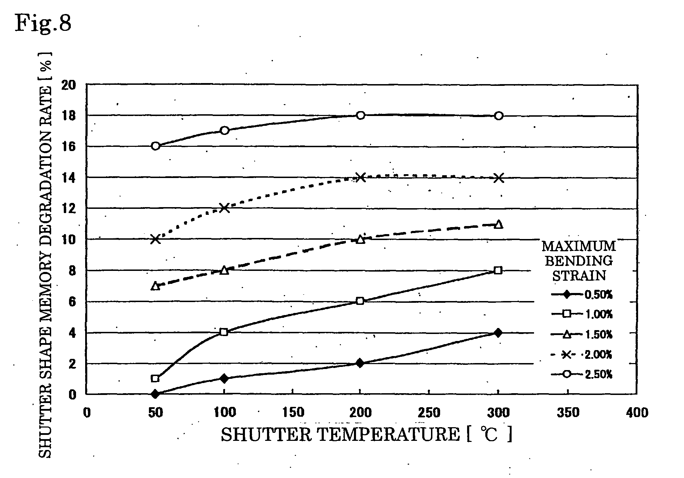

The Ni-Ti super-elastic alloy foil like the example 1 was produced. Then, the obtained super-elastic alloy foil was cut into the shutter plate 2 having the rectangular shape by punching as shown in FIG. 4, and this shutter plate 2 was mounted to the housing part 10 having the configuration as shown in FIG. 4. Then, the insertion and removal of the optical connector into or from the housing part 10 were repeatedly carried out 1000 times to conduct the test on the durability of the shutter plate 2. The result is as shown in FIG. 8.

As shown in FIG. 8, there was provided excellent durability, since a degradation rate of the shutter plate to shape recovery was equal to or less than 15%, even after the repetition of the insertion and removal of the optical connector into or from the housing part 1000 times in the temperature range of 50 to 100° C.

## Claims

1. An optical connector adapter having, at one end side, a housing part with a tip end being open, and at the other end side, a coupling part adapted to provide coupling with an optical component, and serving to couple an optical connector plug coupled with said housing part by insertion with said optical component such that an optical axis is aligned, wherein a super-elastic alloy shutter plate having been subjected to a plate-shape memory heat-treatment without providing any bent part is so mounted at an inner position close to an opening end of said housing part as to stand upward from one wall surface to a position adapted to shield said optical axis.

2. The optical connector adapter according to claim 1, wherein said one wall surface of said housing part has a groove inwardly slanted in parallel to the other end direction of said optical connector adapter, and said shutter plate ensures that a base thereof is inserted into said groove in an anti-slip-out state.

3. The optical connector adapter according to claim 1, wherein said one wall surface of said housing part provides a slant surface inwardly slanted in parallel to the other end direction of said optical connector adapter, said slant surface has a projection, and at the opposite sides, grooves extending in parallel to said slant surface, a base of said shutter plate has a hole corresponding to said projection, and said shutter plate is mounted in engagement of said hole with said projection, and with the opposite sides of the base inserted into the respective grooves.

4. A shutter component for optical connection, which is useful by being mounted to an optical connector adapter having, at one end side, a housing part with a tip end being open, and at the other end side, a coupling part adapted to provide coupling with an optical component, has, at one end side, a housing with a tip end being open, and at the other end side, a coupled part coupled with the housing part of said optical connector adapter by insertion, and serves to couple an optical connector plug coupled with said housing by insertion with said optical component such that an optical axis is aligned, wherein a super-elastic alloy shutter plate having been subjected to a plate-shape memory heat-treatment without providing any bent part is so mounted at an inner position close to an opening end of said housing as to stand upward from one wall surface to a position adapted to shield said optical axis.

5. A shutter component for optical connection, which is useful by being mounted to an optical connector adapter having, at one end side, a housing part with a tip end being open, and at the other end side, a coupling part adapted to provide coupling with an optical component and serving to couple an optical connector plug coupled with said housing part by insertion with said optical component such that an optical axis is aligned, wherein said shutter component has a cylindrical housing mounted to an outer circumference of at least a portion close to an opening end of said housing part such that said opening end is merged into said housing by a prescribed distance, and a super-elastic alloy shutter plate having been subjected to a plate-shape memory heat-treatment without providing any bent part is so mounted to one wall surface of said housing as to stand upward from a position facing to an opening end of said housing part with said housing mounted to said housing part to a position adapted to shield said optical axis.

6. The shutter component for optical connection according to claim 4 or 5, wherein said one wall surface of said housing has a groove inwardly slanted in parallel to the other end direction of said optical connector adapter, and said shutter plate ensures that a base thereof is inserted into said groove in an anti-slip-out state.

7. The shutter component for optical connection according to claim 4 or 5, wherein said one wall surface of said housing provides a slant surface inwardly slanted in parallel to the other end direction of said optical connector adapter, said slant surface has a projection, and at the opposite sides, grooves extending in parallel to said slant surface, a base of said shutter plate has a hole corresponding to said projection, and said shutter plate is mounted in engagement of said hole with said projection, and with the opposite sides of the base inserted into the respective grooves.
